## Europäisches Patentamt

## European Patent Office

## Office européen des brevets

(19)

(11) Veröffentlichungsnummer : **0 349 828 B1**

(12)

# EUROPÄISCHE PATENTSCHRIFT

(45) Veröffentlichungstag der Patentschrift :
**27.05.92 Patentblatt 92/22**

(51) Int. Cl.$^5$ : **C08F 8/44,** C08F 210/02,
// (C08F210/02, 220:04)

(21) Anmeldenummer : **89111195.7**

(22) Anmeldetag : **20.06.89**

(54) **Verfahren zur ionischen Vernetzung eines Ethylencopolymerisates.**

(30) Priorität : **30.06.88 DE 3822069**

(43) Veröffentlichungstag der Anmeldung :
**10.01.90 Patentblatt 90/02**

(45) Bekanntmachung des Hinweises auf die
Patenterteilung :
**27.05.92 Patentblatt 92/22**

(84) Benannte Vertragsstaaten :
**AT BE DE ES FR GB NL**

(56) Entgegenhaltungen :
**EP-A- 0 193 110**
**EP-A- 0 199 011**
**EP-A- 0 223 182**
**DE-A- 1 745 939**

(73) Patentinhaber : **BASF Aktiengesellschaft
Carl-Bosch-Strasse 38
W-6700 Ludwigshafen (DE)**

(72) Erfinder : **Hasenbein, Norbert, Dr.
Neuoettinger Strasse 4
W-6716 Dirmstein (DE)**
Erfinder : **Schlemmer, Lothar
Duisbergstrasse 1a
W-6701 Maxdorf (DE)**
Erfinder : **Muehlenbernd, Thomas, Dr.
Siegelsmauer 3a
W-6900 Heidelberg (DE)**
Erfinder : **Koehler, Gernot, Dr.
Calvinstrasse 7c
W-6520 Worms 1 (DE)**

EP 0 349 828 B1

## Beschreibung

Die Erfindung betrifft ein Verfahren zur Herstellung von ionisch vernetzten Ethylencopolymerisaten durch Mischen von Ethylencopolymerisaten, die 0,1 bis 20 Mol.% $\alpha$, $\beta$-ethylenisch ungesättigte Carbonsäuren oder $\alpha$, $\beta$-ethylenisch ungesättigte Carboxylgruppen liefernde Comonomere einpolymerisiert enthalten, mit einem wasserlöslichen Metallsalz bei Temperaturen oberhalb des Schmelzpunktes des Ethylencopolymerisats in einem Zweiwellenextruder.

Bei derartigen Verfahren werden thermoplastische Ethylencopolymerisate mit carboxylgruppenhaltigen Monomeren, von denen ein Teil als freie Carboxylgruppe vorliegt, der Rest mit Metallkationen gebunden ist, erhalten, so daß eine gewisse Quervernetzung erreicht wird.

Verfahren zum Modifizieren von Carboxylgruppen-enthaltenden Ethylencopolymeren sind beispielsweise in den US-Patenten 32 64 272 und 39 69 434 und im britischen Patent 1 475 336 beschrieben. Die Herstellung erfolgt hierbei einmal auf Kautschukmahlwerken, Zweiwalzenmahlwerken und Plastifizierungsextrudern mit einem Längen/Durchmesserverhältnis von 21 oder auf einem Einwellenextruder wie er beispielsweise im US-Patent 30 06 029 beschrieben ist.

Die Verfahren weisen jedoch den Nachteil auf, daß die Homogenität der erhaltenen ionisch vernetzten Ethylencopolymerisate zu wünschen übrig läßt.

Ein elegantes Verfahren zur Herstellung von ionisch vernetzten Ethylencopolymerisaten mit verbesserter Produkthomogenität ist in der EP-A-01 93 110 beschrieben. Dort sind jedoch speziell konstruierte Entgasungsöffnungen erforderlich, um zu verhindern, daß das Produkt aus der Entgasungsöffnung herausgedrückt und unkontrolliert wieder eingezogen wird, wodurch Stippenbildung erfolgt. Insbesondere bei hohen Mengen an zu verdampfenden und abzuziehenden wäßrigen Essigsäurelösungen kommt es zum Aufschäumen und infolge unkontrolliert eingezogenen Materials zu Stippenbildung. Außerdem wird für den Umsatz eine relativ lange Reaktionszone benötigt, so daß kaum Extruderlänge zur wirksamen Entgasung zur Verfügung steht.

Die Aufgabe bestand darin, ein Verfahren zur ionischen Vernetzung von Ethylencopolymerisaten im Extruder zu finden, bei dem einerseits Produkte mit guter Homogenität erhalten werden und bei dem andererseits eine wirksame Entgasung des Produktes insbesondere bei hohen Polymerdurchsätzen gewährleistet ist.

Die Aufgabe wurde gemäß den Patentansprüchen 1 bis 4 gelöst.

Als Ethylencopolymerisate kommen Copolymerisate des Ethylens, die 0,1-20 Mol.% vorzugsweise 0,25-10 Mol.% bezogen auf das Copolymerisat, $\alpha$, $\beta$-ethylenisch ungesättigte Carbonsäuren oder $\alpha$, $\beta$-ethylenisch ungesättigte Carboxylgruppen liefernde Comonomere einpolymerisiert enthalten, in Frage. Unter $\alpha$, $\beta$-ethylenisch ungesättigten Carbonsäuren werden dabei die üblichen mit Ethylen copolymerisierbaren Carbonsäuren wie Acrylsäure, Methacrylsäure, Itakonsäure, Maleinsäure oder Fumarsäure verstanden. $\alpha$, $\beta$-ethylenisch ungesättigte, Carboxylgruppen-liefernde Comonomere sind beispielsweise Methylhydrogenmaleinat, Maleinsäureanhydrid, tert.-Butylacrylat etc., d.h. Comonomere, die während oder nach der Polymerisation durch Hydrolyse und/oder Pyrolyse in Carboxylgruppen-enthaltende Comonomere umgesetzt werden. Die Ethylencopolymerisate können neben den $\alpha$, $\beta$-ethylenisch ungesättigten Carbonsäuren bzw. Carboxylgruppen-liefernden Comonomeren noch andere mit Ethylen copolymerisierbare Comonomere einpolymerisiert enthalten (vgl. EP-A 1 106 999). Hierbei kommen insbesondere in Frage Ester der (Meth)acrylsäure, Mono- und Diester der Maleinsäure und Fumarsäure, Amide monoethylenisch ungesättigter Carbonsäuren, insbesondere (Meth)acrylsäureamid sowie N-Mono- und N,N-Dialkylamide der (Meth)acrylsäure. Die Ethylencopolymerisate sind an sich bekannt, und beispielsweise in den Literaturstellen GB-A 2 091 745, US-A 3 520 861, US-A 3 264 272, GB-A 1 011 981, US-A 3 404 134 oder US-A 3 969 434 beschrieben. Geeignete Ethylencopolymerisate sind auch die entsprechenden Pfropfcopolymerisate.

Die Schmelzindices der Ethylencopolymerisate liegen im allgemeinen im Bereich von 0, 1-500 g/10' gemessen bei 190°C und 2,16 kp (nach DIN 53 735). Bevorzugt sind Produkte mit einem Schmelzindex von 2-80 g/10'. Die Schmelzpunkte der Ethylencopolymerisate liegen im Bereich von 70 bis 115°C.

Unter wasserlöslichen Metallsalzen werden Verbindungen verstanden, wie sie beispielsweise in der US-A 3 264 272 definiert sind. Bevorzugt sind hierbei Verbindungen mit Metallionen wie Natrium und Zink. Besonders bevorzugt ist Zinkacetat, Natriumacetat oder Zinkformiat.

Im allgemeinen werden mindestens 10 Gew.% der Säuregruppierungen im Ethylencopolymerisat neutralisiert. Die Bestimmung des Neutralisationsgrades kann hierbei durch IR-Analysen, durch Titration bzw. durch Metallanalyse erfolgen.

Erfindungsgemäß erfolgt die ionische Vernetzung des Ethylencopolymerisats in einem korrosionsgeschützten Zweiwellenextruder, z.B. ZSK 57 der Firma Werner & Pfleiderer. Dazu wird das Ethylencopolymerisat in den gekühlten, mit Stickstoff überlagerten Einzug des Extruders dosiert und bei Temperaturen von 140-180°C vorzugsweise bei 140-160°C, aufgeschmolzen. In die Schmelze wird die Metallsalzlösung eingepumpt und homogen eingemischt und zum Ionomeren umgesetzt (Reaktionszone = erste Zone). Die Reaktionszone hat eine Länge von 5 D (D beschreibt die Länge der Zone ausgedrückt in Vielfachen des Schneckendurchmessers) oder ist noch kürzer. Dies ist überraschend, da nach der Lehre der EP-A 193 110 eine 6-15 D lange Reaktionszone gefordert ist. Trotzdem ist die erfindungsgemäß verwendete Reaktionszone für einen vollständigen Metallsalzumsatz ausreichend.

An die erste Extruderzone schließt sich eine zweite Extruderzone, die Entgasungszone an. Die Entgasungszone ist mehr als 15 D lang und mit 3 Entgasungsdomen ausgerüstet, die mit gestuften Vakua betrieben werden. Die Vakua betragen bevorzugt 800, 100 und 10 mbar. Die Temperaturen in der Entgasungszone betragen 200-270°C, wobei Temperaturen zwischen 220°C und 260°C bevorzugt sind. Ganz besonders bevorzugt sind Temperaturen von 250 bis 260°C. Dies ist überraschend, da nach dem in EP-A 193 110 beschriebenen Verfahren die Temperaturen höchstens 230°C betragen dürfen. Nach erfindungsgemäßem Verfahren beträgt bevorzugt die mittlere Verweilzeit in der ersten Extruderzone 10 bis 15 s und in der zweiten Extruderzone 40 bis 60 s, wobei unter mittlerer Verweilzeit verstanden wird die Zeit, in der die Hälfte der durch das Verweilzeitspektrum erfaßten Partikel die Extruderzone passiert hat.

Beispiel 1

In den Einzug eines Zweiwellenextruders ZSK 57 der Firma Werner & Pfleiderer mit einem Längen/Durchmesser-Verhältnis von 39 werden 100 kg eines Ethylen-Acrylsäure-Copolymerisates (8 Gew.% Acrylsäure; MFI-Wert 15 g/10', bestimmt nach DIN 53 735) zudosiert. Die Länge der Einzugszone beträgt das dreieinhalbfache des Schneckendurchmessers (3,50 D).

Das Copolymerisat wird im Extruder in einem Längenbereich von 9 D (D = Verhältnis Länge der Zone zu Schneckendurchmesser) bei 140°C aufgeschmolzen und in die Reaktionszone mit einer Länge von 5 D überführt. In die Reaktionszone werden 18 kg/h einer 20 gew.%igen wäßrigen Zinkacetatlösung eingespritzt. Das Copolymerisat und die Zinkacetatlösung werden bei 220°C gemischt und zur Reaktion gebracht. Die dabei freiwerdende Essigsäure und das mit Zinkacetatlösung eingebrachte Wasser werden in der nachfolgenden dreistufigen Entgasungszone mit einer Länge von 18,5 D bei 220°C an 3 hintereinander angeordneten Entgasungsstutzen bei Unterdruck entfernt. Am 1. Entgasungsstutzen wird ein Druck von ca. 800 mbar, am 2. Entgasungsstutzen von ca. 100 mbar und am 3. Entgasungsstutzen von ca. 10 mbar aufrecht erhalten. Die mittleren Verweilzeiten in der Reaktions- bzw. Entgasungszone betragen 12 bzw. 45 s.

Über die am Ende der Austragszone (Länge 6,5 D; Temperatur 220°C) angebrachte Düsenplatte wird das ionisch vernetzte Copolymerisat ausgetragen. Im erhaltenen Endprodukt sind 35,4 Mol.% der Carboxylgruppen mit Zinkionen neutralisiert; der MFI-Wert beträgt 1,9 g/10'. Das Produkt ist völlig geruchlos und stippenfrei. Es eignet sich ganz besonders für den Beschichtungs- und Verpackungssektor.

Beispiel 2

In den Einzug eines Zweiwellenextruders ZSK 57 der Firma Werner & Pfleiderer mit einem Längen/Durchmesser-Verhältnis von 39 werden 100 kg/h eines Ethylen-Acrylsäure-Copolymerisates (8 Gew.% Acrylsäure; MFI-Wert 15 g/10', bestimmt nach DIN 53735) zudosiert. Die Länge des Einzugsbereichs beträgt das dreieinhalbfache des Schneckendurchmessers (3,5 D).

Das Copolymerisat wird im Extruder in einem Längenbereich von 9 D bei 140°C aufgeschmolzen und in die Reaktionszone mit einer Länge von 5 D überführt. In die Reaktionszone werden 18 kg/h einer 20 gew.%igen wäßrigen Zinkacetatlösung eingespritzt. Das Copolymerisat und die Zinkacetatlösung werden bei 220°C gemischt und zur Reaktion gebracht. Die dabei freiwerdende Essigsäure und das mit Zinkacetatlösung eingebrachte Wasser werden in der nachfolgenden dreistufigen Entgasungszone mit einer Länge von 18,5 D bei 260°C an 3 hintereinander angeordneten Entgasungsstutzen bei Unterdruck entfernt. Am 1. Entgasungsstutzen wird ein Druck von ca. 800 mbar, am 2. Entgasungsstutzen wird ein Druck von ca. 100 mbar und am 3. Entgasungsstutzen von ca. 10 mbar aufrecht erhalten. Die mittleren Verweilzeiten in der Reaktions- bzw. Entgasungszone betragen 12 bzw. 45 s.

Über die am Ende der Austragungszone (Länge 6,5 D; Temperatur 260°C) angebrachte Düsenplatte wird das ionisch vernetzte Copolymerisat ausgetragen. Im erhaltenen Endprodukt sind 35,4 % der Carboxylgruppen mit Zinkionen neutralisiert; der MFI-Wert beträgt 1,9 g/10'. Das Produkt ist völlig geruchlos und stippenfrei. Es eignet sich ganz besonders für den Beschichtungs- und Verpackungssektor.

Vergleichsversuch 1

Es wurde verfahren, wie in Beispiel 1 mit der Abänderung, daß die Entgasungszone nur 2 Entgasungsstutzen enthielt. Am 1. Entgasungsstutzen wird ein Druck von 100 mbar und am 2. Entgasungsstutzen ein Druck von 10 mbar eingehalten.

Während des Entgasungsvorgangs kam es häufig zum Aufschäumen und zu einem unkontrollierten Aufsteigen der Schmelze in den Entgasungsstutzen. Folien aus den hergestellten Ionomeren enthielten zahlreiche Stippen. Die mechanischen Eigenschaften von Ionomerfolien sind schlechter als die aus Ionomeren gemäß Beispiel 1 hergestellten Folien. Die freigesetzte Essigsäure konnte nicht quantitativ aus der Polymerschmelze entfernt werden, wie der Tabelle 1 zu entnehmen ist.

Tabelle 1

|  | Stippenpegel | Foliennote | Essigsäure* | DDI** | Reißfestig- keit*** |
|---|---|---|---|---|---|
|  |  |  | ppm | d | N/mm$^2$ |
| Beispiel 1 | niedrig | 3,25 | < 2 | 930 | 47 |
| Vergleichs- versuch 1 | hoch | 4,5 | 810 | 630 | 25 |

\*    bestimmt durch Gaschromatographie nach Extraktion mit $CHCl_3$
\*\*   bestimmt nach ASTM 1709, DDI = dart drop impact
\*\*\* bestimmt nach DIN 53 455

Vergleichsversuch 2

Es wurde verfahren, wie in Beispiel 2 mit der Abänderung, daß die Entgasungszone nur 2 Entgasungsstutzen enthielt. Am 1. Entgasungsstutzen wird ein Druck von 100 mbar und am 2. Entgasungsstutzen ein Druck von 10 mbar eingehalten.

Während des Entgasungsvorgangs kam es häufig zum Aufschäumen und zu einem unkontrollierten Aufsteigen der Schmelze in den Entgasungsstutzen. Folien aus den hergestellten Ionomeren enthielten zahlreiche Stippen. Die mechanischen Eigenschaften von Ionomerfolien sind schlechter als die aus Ionomeren gemäß Beispiel 2 hergestellten Folien. Die freigesetzte Essigsäure konnte nicht quantitativ aus der Polymerschmelze entfernt werden, wie der Tabelle 2 zu entnehmen ist.

Tabelle 2

|  | Stippenpegel | Foliennote | Essigsäure* | DDI** | Reißfestig- keit*** |
|---|---|---|---|---|---|
|  |  |  | ppm | d | N/mm$^2$ |
| Beispiel 2 | niedrig | 3,25 | < 2 | 925 | 46 |
| Vergleichs- versuch 2 | hoch | 5,0 | 690 | 570 | 17 |

\*    bestimmt durch Gaschromatographie nach Extraktion mit $CHCl_3$
\*\*   bestimmt nach ASTM 1709
\*\*\* bestimmt nach DIN 53 455

**Patentansprüche**

1. Verfahren zur Herstellung von ionisch vernetzten Ethylencopolymerisaten durch Mischen von Ethylencopolymerisaten, die 0,1 bis 20 Mol.% α,β-ethylenisch ungesättigte Carbonsäuren oder α,β-ethylenisch ungesättigte Carboxylgruppen liefernde Comonomere einpolymerisiert enthalten, mit einem wasserlöslichen Metallsalz bei Temperaturen oberhalb des Schmelzpunktes des Ethylencopolymerisats in einem Zweiwellenextruder, wobei in einer ersten Zone, der Reaktionszone, die wäßrige Metallsalzlösung mit dem Ethylencopolymerisat quantitativ umgesetzt und in einer zweiten Zone, der Entgasungszone, das Ionomer'vollständig entgast wird, dadurch gekennzeichnet, daß die Länge der Reaktionszone ≤ 5 D und die Länge der Entgasungszone > 15 D ist, wobei D den Schneckendurchmesser angibt, und die Entgasungszone mit 3 Entgasungsdomen ausgeristet ist.

2. Verfahren nach Anspruch 1, dadurch gekennzeichnet, daß in der ersten Extiuderzone eine Temperatur von 140 bis 180°C herrscht.

3. Verfahren nach Anspruch 1, dadurch gekennzeichnet, daß in der zweiten Extruderzone eine Temperatur von 200 bis 270°C herrscht.

4. Verfahren nach Anspruch 1, dadurch gekennzeichnet, daß die mittlere Verweilzeit in der ersten Extruderzone 10 bis 15 s und in der zweiten Extruderzone 40 bis 60 s beträgt.

**Claims**

1. A process for the preparation of an ionically crosslinked ethylene copolymer by mixing an ethylene copolymer which contains, as copolymerized units, from 0.1 to 20 mol % of α,β-ethylenically unsaturated carboxylic acids or α, β-ethylenically unsaturated comonomers donating carboxyl groups with a water-soluble metal salt at above the melting point of the ethylene copolymer in a twin-screw extruder, where, in a first zone, the reaction zone, the aqueous metal salt solution is quantitatively reacted with the ethylene copolymer and, in a second zone, the devolatilization zone, the ionomer is completely devolatilized wherein the length of the reaction zone is ≤ 5D and the length of the devolatilization zone is > 15D, where D is the screw diameter, and the devolatilization zone is equipped with 3 vents.

2. A process as claimed in claim 1, wherein the temperature in the first extruder zone is from 140 to 180°C.

3. A process as claimed in claim 1, wherein the temperature in the second extruder zone is from 200 to 270°C .

4. A process as claimed in claim 1, wherein the mean residence time in the first extruder zone is from 10 to 15 s and that in the second extruder zone is from 40 to 60 s.

**Revendications**

1. Procédé de préparation de copolymères d'éthylène réticulés ioniquement, par mélange de copolymères d'éthylène, qui contiennent en liaison polymère 0,1 à 20% en moles d'acides carboxyliques α,β-insaturés éthyléniquement ou de comonomères fournissant des groupements carboxyle α, β-insaturés éthyléniquement, avec un sel métallique hydrosoluble à des températures supérieures au point de fusion du copolymère d'éthylène, dans une extrudeuse à deux arbres dans laquelle, dans une première zone (la zone de réaction), la solution aqueuse de sel métallique est mise en réaction quantitativement avec le copolymère d'éthylène et, dans une seconde zone de (la zone de dégazage), l'ionomère est complètement dégazé, caractérisé en ce que la longueur de la zone de réaction est égale ou supérieure à 5 D et la longueur de la zone de dégazage est supérieure à 15 D, D désignant le diam-tre de la vis sans fin, et en ce que la zone de dégazage est équipée de 3 dôme de dégazage.

2. Procédé selon la revendication 1, caractérisé en ce qu'une température de 140 à 180° règne dans la première zone de l'extrudeuse.

3. Procédé selon la revendication 1, caractérisé en ce qu'une température de 200 à 270°C règne dans la seconde zone de l'extrudeuse.

4. Procédé selon la revendication 1, caractérisé en ce que le temps de séjour moyen est de 10 à 15 s dans la première zone de l'extrudeuse et de 40 à 60 s dans la seconde zone de l'extrudeuse.